# EUROPEAN PATENT APPLICATION

(11) **EP 2 256 681 A1**
(43) Date of publication of application: **01.12.2010**
(21) Application number: 10250440.4
(22) Date of filing: 10.03.2010
(51) Int. Cl.: G06Q 10/00

(54) **IC tag issue management system and method**

(30) Priority: 26.05.2009 JP 2009126902
(71) Applicant: Hitachi, Ltd., Chiyoda-ku Tokyo 100-8280 (JP)
(72) Inventor: Kawada, Yohei, Chiyoda-ku, Tokyo 100-8220 (JP); Yuasa, Naohiro, Chiyoda-ku, Tokyo 100-8220 (JP); Higaki, Hiroyuki, Chiyoda-ku, Tokyo 100-8220 (JP)
(74) Representative: Calderbank, Thomas Roger

(57) **Abstract**

An IC tag issue management system includes an ID numbering DB which stores an ID and a status of the ID, and an ID history DB which stores the ID, a history number indicating a reuse history of the ID, and a usage history indicated by the history number correlated with each other with each other. The IC tag issue management system numbers the ID with the usage history having a time elapsing from a starting date of the usage history in which the end date is not stored in the ID history DB passing over a predetermined ID-non-reusable period in response to a request for numbering the ID to be written into the IC tag when the unnumbered ID which has not been allocated to the IC tag, and the ID having the status of the ID numbering DB set in the "unused" status do not exist.

## Description

The present invention relates to a noncontact IC (Integrated Circuit) tag (hereinafter referred to as IC tag) issue management system and a method thereof.

Recently, the IC tag has been widely employed in various fields. Especially in the logistical field, the IC tag is attached to the returnable container or cargo for realizing the management and traceability thereof. If there is a huge amount of articles to be tagged, the ID (identifier) to be written into the IC tag may be depleted. According to the code system "SSCC-96" specified by EPCglobal, 18 bits are available for the minimum value of Serial Reference (see EPCglobal Tag Data Standards Version 1.4", EPCglobal Ratified on June 11, 2008, pp.36). In the case where approximately 270 thousands or more articles are handled by a single company, the serial reference, that is, the ID will become deficient. In the case of the serial reference equal to or larger than the aforementioned digit, numbering (allocation) of the new serial reference for each acceptance of the shipped cargo may deplete the IDs in the future.

JP-A No. 2006-39696 discloses the structure which reads an IC tag upon disposal of the article with the IC tag, and manages the ID of the read IC tag in a reusable ID database. This makes it possible to supply the reusable ID to the other article required to be IC tagged, thus preventing depletion of the ID.

JP-A No. 2006-39696 discloses reuse of the ID of the IC tag on the assumption that the IC tag attached to the article subjected to disposal will be collected. It is not assumed that the IC tag is not collected, and accordingly, the ID of the IC tag which is not collected cannot be effectively used.

The structure disclosed in JP-A No. 2006-39696 serves to manage the collected ID in the reusable ID database. However, management of the event information which is generated corresponding to the ID before it is collected (for example, shipment inspection and the like based on the read IC tag) is not considered. In the case where a cargo A with the IC tag is delivered to the shipping address, and thereafter, the ID of the IC tag is reused to be allocated to a cargo B, it is impossible to distinguish the event information which has occurred when the IC tag is allocated to the cargo A from the event information which has occurred when it is allocated to the cargo B. When the event information is referred in order to confirm the status when the IC tag is attached to the cargo A, the event information resulting from attachment of the IC tag to the cargo B which is totally different from the cargo A is supplied as well.

The present invention provides the IC tag issue management system and a method thereof. When numbering the ID, that is, writing the ID into the IC tag, it is determined whether renumbering of the candidate ID is performed in accordance with the numbering status and numbering history by realizing the following structures.

The present invention may thus provide an IC tag issue management system which includes an ID numbering DB which stores an ID and a status indicating one of a "used" status and an "unused" status of the ID in correlation with each other, an ID history DB which stores the ID, a history number indicating a reuse history of the ID, and a usage history having a starting date and an end date of usage of the ID indicated by the history number correlated with each other, a processing unit which numbers the ID with the usage history having a time elapsing from the starting date of the usage history in which the end date is not stored in the ID history DB passing over a predetermined ID-non-reusable period as the ID to be written into the IC tag in response to a request for numbering the ID to be written into the IC tag when the unnumbered ID which has not been allocated to the IC tag (or each ID indicates to be numbered), and the ID having the status of the ID numbering DB set in the "unused" status do not exist (or each ID indicates "used"), and a tag printer which writes the numbered ID into the IC tag.

According to the present invention, when the unnumbered ID exists, the processing unit may number the unnumbered ID as the ID to be written into the IC tag.

According to the present invention, the IC tag issue management system may further include an ID management server provided with the ID numbering DB, the ID history DB and the processing unit, and a tag issue terminal which issues the numbering request of the ID to be written into the IC tag, and is connected to the tag printer.

According to the present invention, the ID numbering DB may store a terminal number indicating the tag issue terminal which has notified with respect to completion of use of the ID in correlation with the ID. In the case where the unnumbered ID does not exist, the ID having the status of the ID numbering DB set to the "unused" exists, and the terminal number stored corresponding to the ID in the "unused" status indicates the tag issue terminal which has issued the numbering request, the ID corresponding to the terminal number stored in the ID numbering DB is numbered as the ID to be written into the IC tag.

According to the present invention, the ID numbering DB stores a "high" priority level indicating that writing of the numbered ID into the IC tag performed by the tag issue terminal is cancelled, in correlation with the ID. When the unnumbered ID does not exist, and the ID having the status of the ID numbering DB set to the "unused" exists, the processing unit numbers the ID corresponding to the "high" priority level stored in correlation with the ID in the "unused" status as the ID to be written into the IC tag.

According to the present invention, the ID management server may be connected to an information reference terminal for issuing a reference request message to the ID management server. A trace information DB is provided for storing event information indicating a subject event accompanied with the use of the IC tag into which the ID is written, and a date when the event occurs, in correlation with the ID. The processing unit of the ID management server specifies an ID and a history number based on the subject attribute information using the IC tag contained in the reference request message, obtains the specified ID and the starting date with the usage history of the history number from the ID history DB, searches the event information indicating that the date when the event occurs is after the obtained starting date from the trace information DB, sorts the searched event information based on the date when the event occurs, and transmits the event information to the information reference terminal which has sent the reference request message.

The invention will be further clarified from the following description taken in connection with the accompanying drawings.

The present invention allows the use of the ID of the IC tag which is not collected although its use has been completed, or the ID of the IC tag which has not been actually issued.

In the drawings:
Fig. 1 illustrates a structure of an IC tag issue management system;
Fig. 2 shows an example of an ID numbering DB structure;
Fig. 3 shows an example of an ID history DB structure;
Fig. 4 shows an example of a trace information DB structure;
Fig. 5 shows an example of an ID status file structure;
Fig. 6 shows an operation of the IC tag issue management system;
Fig. 7 is a flowchart of a terminal number priority selection process;
Fig. 8 is a flowchart of a priority selection process;
Fig. 9 is a flowchart of a reusable ID collection process;
Fig. 10 is a flowchart of an ID reuse process;
Fig. 11 is a flowchart of a tag issue process; and
Fig. 12 is a flowchart of an event information reference process.

An embodiment of the present invention will be described referring to the drawings.

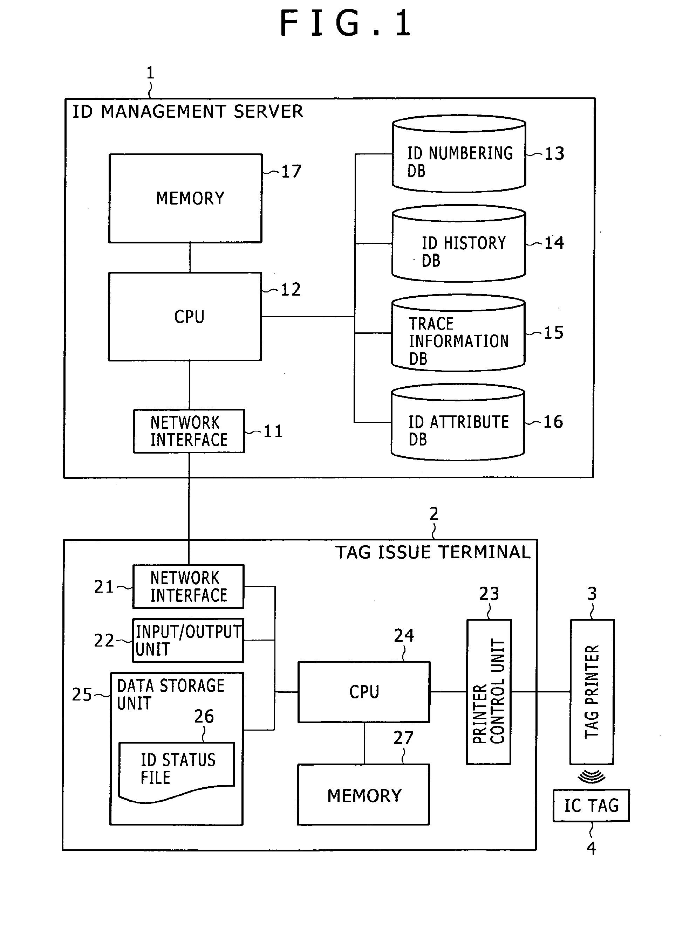

Fig. 1 illustrates a structure of an IC tag issue management system according to an embodiment of the present invention, which is applied to a logistical cargo management system.

The IC tag issue management system illustrated in Fig. 1 includes an ID management server 1 disposed in a head office or a data center of the logistical cargo management, and at least one tag issue terminal 2 disposed in the cargo handling base. The ID management server 1 and the tag issue terminal 2 are connected through wired or wireless network such as the Internet.

The ID management server 1 and the tag issue terminal 2 are formed as computers which include at least memories 17, 27 used for the process to be described later such as a RAM (Random Access Memory), arithmetic processing units (CPUs) 12, 24, and network interfaces 11, 21 for communication, respectively. The respective processes will be realized by the CPUs 12, 24 for executing the programs stored in the memories 17, 27.

The ID management server 1 is structured to manage an ID (identifier) for identifying an IC tag 4. The process executed by the ID management server 1 will be described in detail later.

The tag issue terminal 2 serves as a terminal which controls a tag printer 3 for issuing the IC tag 4 to be added to the cargo. The IC tag 4 is issued by writing the allocated ID into the IC tag 4. The tag printer 3 writes an ID which has been designated (allocated) by the tag issue terminal 2 into the IC tag 4 into which the ID has not been written. The process executed by the tag issue terminal 2 will be described later.

The ID allocated upon the tag issue is written into the IC tag 4. The IC tag 4 with different ID is attached to each cargo accepted for distribution at the cargo handling base. The cargos may be identified one by one by reading the IC tag 4 through a reader (IC tag reader). When the cargo is delivered to the destination, the IC tag 4 is removed from the cargo. The use of the ID written into the removed IC tag 4 is completed while indicating reusability (notifying the ID management server 1 of completion of the use) such that the ID may be reused and written into the other IC tag 4 upon its issue.

The ID management server 1 and the tag issue terminal 2 may be integrally formed into the same device. Alternatively, another server and another terminal may be added for executing the divided steps of the process, respectively to be described below. For example, a trace information management server capable of referring and obtaining the information together with the ID management server 1 may be connected thereto for executing the process relevant to the trace information together with a trace information DB 15. The ID management server 1 is connected to a terminal (information reference terminal) used for referring to the information contained in the ID management server 1 via a network.

Respective DBs (databases) used in the IC tag issue management system will be described.

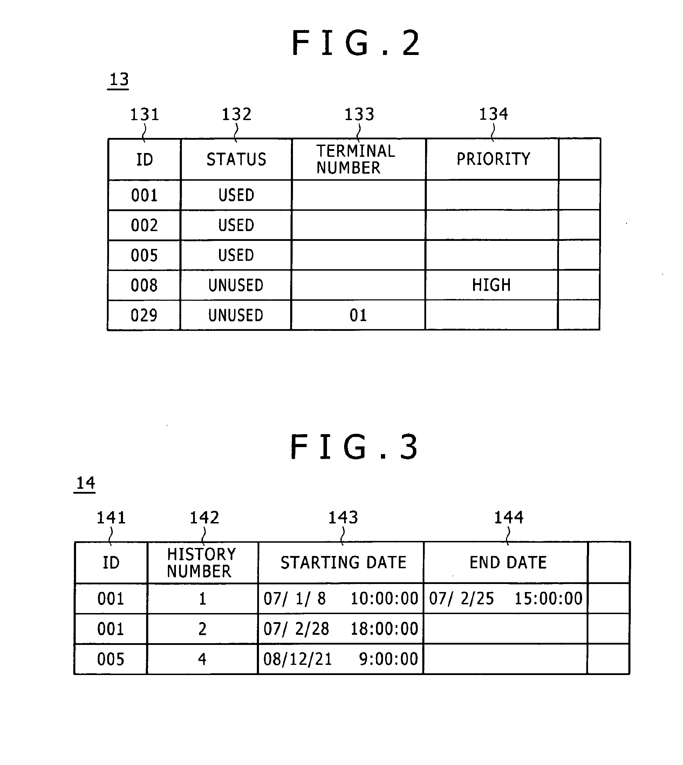

Fig. 2 shows an example of a structure of an ID numbering DB 13 for managing a numbered (allocated) ID (the term "numbering" (setting a number indicating the ID) is used for indicating the "allocation"). In the ID numbering DB 13, one record (row in the table of Fig. 2) indicates the information with respect to the single ID, and contains such data as a numbered ID 131, a status 132 of the ID, a terminal number 133 for identifying the tag issue terminal 2 for collecting the used ID, and a priority 134 indicating a priority order of the ID numbering.

The record is registered in the ID numbering DB 13 in accordance with ID numbering. The status 132 is changed in accordance with change in the status of the ID or the IC tag 4 into which the ID has been written. In the embodiment, the status 132 is selected from "used", "unused", and "tag failure". The "used" status denotes that the IC tag 4 into which the subject ID has been written is issued and used. The "unused" status denotes that the numbered ID is unused, for example, the IC tag with the subject ID has been collected as used, and the ID is not newly numbered (not reused), and in spite of numbering of the ID, the issue of the IC tag of the subject ID is cancelled by the tag issue terminal 2, or the IC tag cannot be issued owing to the tag printer 3 failure. The "tag failure" state denotes the failure of the IC tag into which the numbered ID has been written.

The terminal number 133 is a number for identifying the tag issue terminal 2 in the case where the issue of the IC tag 4 is cancelled, or the tag printer 3 which fails to issue the IC tag 4 is connected. The "priority" 134 indicates "high" when the subject ID is used upon the ID numbering with priority.

Fig. 3 shows an example of the structure of the ID history DB 14 for managing the ID usage history. The ID history DB 14 has the single record indicating the history of use of the single ID. The single use history denotes the information recorded from numbering of the ID to collection of the IC tag 4 into which the ID is written as being used. Accordingly, when the IC tag 4 is collected and the written ID is newly used, the new record is stored in the ID history DB 14 as the new usage history corresponding to the new usage (reuse).

The ID management server 1 manages the ID usage history based on an ID 141, a history number 142, a starting date 143, and an end date 144 of the object used or in use. The history number 142 denotes the number of times the ID 141 is used. When it is numbered first time, "1" is set. When the usage of the ID is completed, and it is newly numbered and used (reused), "2" is set. The set value is incremented every time when the same ID is newly used. The starting date 143 denotes the date when the use of the ID is started (numbered). The end date 144 denotes the date when the IC tag 4 into which the ID has been written is collected as being used, that is, the date when the end of the ID is explicitly registered. The term "explicitly" represents that the ID is read through the IC tag reader, and is input into the ID management server 1 together with the information indicating completion of the ID usage.

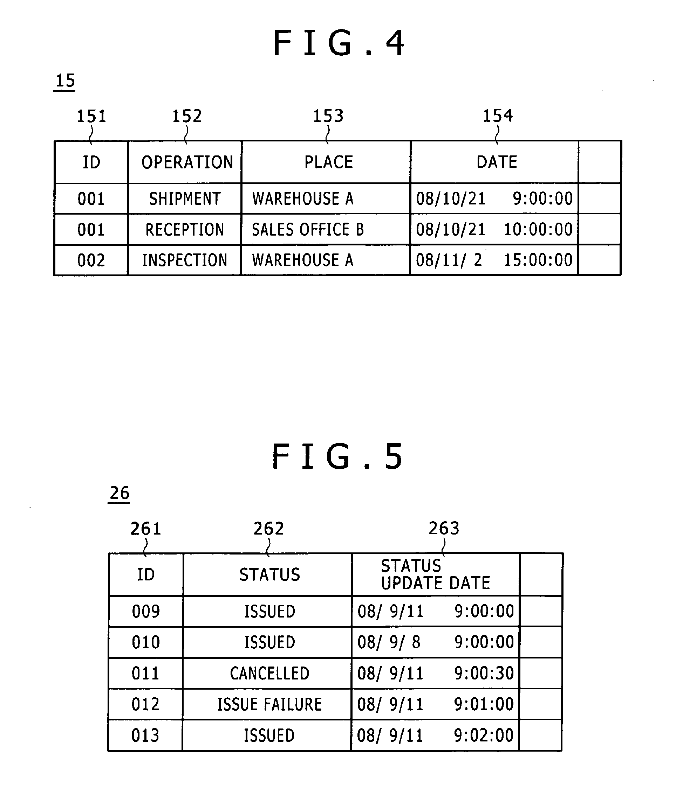

Fig. 4 shows an example structure of the trace information DB 15 for managing performance information with respect to operations of the cargo with the IC tag 4 such as acceptance and shipment (event information). The trace information DB 15 stores records each indicating the single event, and the record includes an ID 151 of the IC tag 4 attached to the cargo which relates to the event, an operation 152 indicating the event, a place 153 indicating the cargo handling base where the operation is conducted, and a date 154 when the event has occurred. The information stored in the trace information DB 15 is input using a mobile information terminal which is different from the tag issue terminal 2 depending on the place where the operation is conducted. The input information is transmitted to the ID management server 1 indirectly via the tag issue terminal 2 or directly. The ID management server 1 obtains the event information (record) with the same ID 151 from the trace information DB 15, and arranges the obtained data in the order of the date 154 to trace the event of the cargo corresponding to the ID 151.

An ID attribute DB 16 (not shown) stores the attribute information of the cargo with the IC tag 4 into which the ID is written in response to the written ID.

The single record indicates the single ID and the cargo attribute information corresponding to the history number of the ID (the history number 142 in the ID history DB 14). The cargo attribute information contains the type, owner, size, and weight of the cargo. The IC tag 4 with the written ID is attached to the cargo upon acceptance of the cargo shipment. The tag issue terminal 2 registers the ID read from the attached IC tag 4 in correlation with the input cargo attribute information so as to be registered in the ID attribute DB 16 of the ID management server 1.

Referring to Fig. 1, the tag issue terminal 2 will be described. An input/output unit 22 of the tag issue terminal 2 is an interface with the user thereof for receiving a user's tag issue request or cancellation, and outputting the tag issue result to the screen of the display unit for operation and confirmation performed by the user.

A printer control unit 23 controls one or more printers 3 connected to the tag issue terminal 2, sequentially stores the tag issue job received from the CPU 24 in a queue held by the printer control unit 23 so as to sequentially take the tag issue job from the queue for execution. The printer 3 then writes the ID and the like into the IC tag 4. The writing of the ID into the IC tag 4 is called tag issue.

Upon reception of the cancel request from the user, the printer control unit 23 takes the corresponding tag issue job from the queue, or interrupts execution of the tag issue job for cancellation. The corresponding tag issue job is the one corresponding to the specified ID upon reception of the cancellation request having the ID specified, and becomes the tag issue job stored in the queue and the one under execution upon reception of the cancellation request having no ID specified. Upon execution of the tag issue job, the return value from the tag printer 3 (success/failure of issue of IC tag 4) is input, and transmitted to the CPU 24.

The tag issue terminal 2 requires the ID management server 1 to issue the ID by the tag issue number required by the user via the input/output unit 22. Upon reception of the numbered ID from the ID management server 1, the tag issue terminal 2 generates an ID status file 26 so as to be stored in a data storage unit 25.

Fig. 5 shows an example of the structure of the ID status file 26 which is stored in the data storage unit 25 by the tag issue terminal 2. The ID status file 26 includes records, and each record indicates a single ID status. In response to the ID obtained from the ID management server 1, the tag issue terminal 2 adds the record for managing the status of the obtained ID to the ID status file 26. The ID status is managed based on an ID 261, a status 262 of the ID, and a date 263 when the status 262 is updated. In the embodiment, the status 262 is any one selected from "issued", "unissued", "cancelled", and "issue failure". The "issued" status indicates that the IC tag 4 with the written ID 261 has been issued (in the state where the IC tag 4 is attached to the cargo so as to start the usage or in the state where the usage has already been started). The "unissued" status indicates that the ID is obtained from the ID management server 1, but the tag issue terminal 2 has not issued the tag (in the state where the ID has not been written into the IC tag 4). The "cancelled" status indicates that the tag issue terminal 2 has started the tag issue process, but execution of the process is cancelled by the user, or execution of the process has not been normally finished, for example, the tag issue has been abnormally finished owing to the software error (writing of the ID into the IC tag 4 was tried, but it failed). The "issue failure" status indicates that the ID cannot be written into the IC

tag 4 owing to malfunction of the tag printer 3 or the IC tag 4, for example, failure of the tag printer 3 or malfunction of the IC tag 4 fails to write the ID upon execution of the tag issue process (writing of the ID into the IC tag 4 was tried, but it failed owing to malfunction of the hardware such as the tag printer 3 and the IC tag 4). In the "issue failure" status, execution of the tag issue process cannot be normally finished. Such status which is different from the "cancelled" status is required to manage the status for the priority process (ID priority issue to be described later) in accordance with the point of cause where the process has not been normally completed. In other words, the "issue failure" status is contained in the "cancelled" status, but is executed as the different status in view of the status management. When the record is added to the ID status file 26 as the ID is derived from the ID management server 1, the status 262 is set to the "unissued", and the date when the record has been added is set as the status update date 263.

The tag issue terminal 2 changes the status 262 of the ID status file 26, and stores the current date (the date read from the timer (not shown) of the tag issue terminal 2) to the status update date 263 in response to the execution result of the tag issue job performed by the printer control unit 23, and the cancellation command from the user. When the tag issue result is reflected on the IDs 261 stored in all the tag issue numbers of the ID status files 26 required by the user (changing the status 262, and storing the status update date 263), the ID status file 26 is transmitted to the ID management server 1 immediately or after an elapse of a predetermined time period. If the transmission to the ID management server 1 succeeds, the ID status file 26 is deleted.

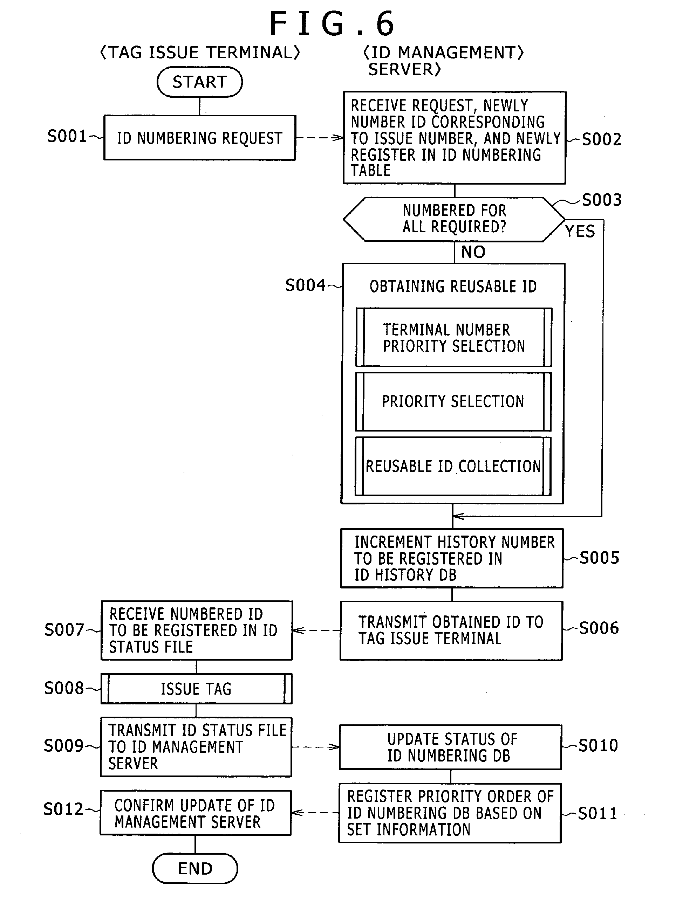

Fig. 6 illustrates an operation for issuing the IC tag 4 in cooperation with the ID management server 1 and the tag issue terminal 2 in the IC tag issue management system.

The tag issue terminal 2 receives the tag issue request designating the number of the IC tags 4 via the input/output unit 22, and transmits a request message (ID numbering request) for ID numbering (ID allocation) by the issue number of the IC tag 4 to the ID management server 1. The request message contains a terminal number for specifying the tag issue terminal 2 besides the issue number (number of ID to be numbered) (S001).

The ID management server 1 receives the request message from the tag issue terminal 2, refers to the ID 131 in the ID numbering DB 13, numbers the non-registered ID, and stores the ID in a table of an unshown work area (memory region) on the memory 17 together with the information indicating that the ID is newly numbered (for example, "0") so as to be registered in the ID numbering DB 13. The process for registering to the ID numbering DB 13 is executed by newly setting the record in the ID numbering DB 13, storing the numbered ID in the ID 131 of the record, and setting the status 132 to the "used" (S002). The ID management server 1 numbers the ID, stores the numbered ID in the work area table, and registers to the ID numbering DB 13 repeatedly by the number corresponding to the issue number contained in the received request message. The list of the numbered IDs is generated in the work area table.

Depletion of the ID which can be newly numbered may occur during repetitive execution of step S002. If numbering of the IDs corresponding to the issue number is completed, the process proceeds to step S005. If the ID to be newly numbered is depleted, the process proceeds to step S004 (S003).

If the ID which can be newly numbered is depleted, the ID management server 1 executes the reusable ID obtaining process to be described later. Upon execution of the process for obtaining the reusable ID, the ID to be reused is determined, and the determined ID is stored in the work area table together with the information indicating that the ID is reusable (for example, "1") to update the ID numbering DB 13. In the process for updating the ID numbering DB 13, the record status 132 with the ID 131 to be reused in the ID numbering DB 13 is set to the "used" (S004). The ID management server 1 executes determination of the ID to be reused, storage of the determined ID in the work area table, and updating of the ID numbering DB 13 by the time corresponding to the number of deficient IDs in step S002 ((number of deficient ID) = (issue number of IC tag 4 contained in the received request message) - (number of newly numbered IDs in step S002)). The list including the newly numbered IDs and the IDs to be reused is generated in the work area table.

The ID management server 1 registers the newly numbered ID stored in the work area table, and the history information of the ID to be reused in the ID history DB 14. The information indicating the newly numbered ID (for example, "0"), and the ID stored in the work area table are registered in the ID history DB 14 by setting the new record in the table of the ID history DB 14, storing the newly numbered ID as the ID 141 of the record, storing "1" as the history number 142, and storing the current date (the date read from the unshown timer of the ID management server 1) as the starting date 143. The information indicating the ID to be reused (for example, "1"), and the ID stored in the work area table are registered in the ID history DB 14 by setting the new record in the table of the ID history DB 14, storing the ID to be reused as the ID 141 of the record, referring to the ID 141 of the ID history DB 14 using the reusable ID as the key, obtaining the latest history number 142 of the corresponding ID 141, incrementing the obtained history number so as to be stored as the history number 142 of the newly set record, and storing the current date as the starting date 143 (S005).

The ID stored in the list of the work area table is transmitted to the tag issue terminal 2 with the terminal number which has transmitted the request message as the response message (S006).

There may be a case where the IDs corresponding to the issue number of the IC tag 4 contained in the request message (ID numbering request) cannot be obtained irrespective of execution of the process for obtaining the reusable ID. In such a case, the return message generated upon execution of the process for obtaining the reusable ID (to be described later) is contained in the response message.

The tag issue terminal 2 receives the response message from the ID management server 1, and generates the ID status file 26. The ID status file 26 may be preliminarily generated as the file including the records corresponding to the issue number contained in the request message. The ID contained in the response message is stored as the ID 261 of the ID status file 26, the status 262 of the ID is set to the "unissued", and the current date (the date read from the unshown timer of the tag issue terminal 2) is stored as the date 263 (S007). The process in S007 is executed for all the IDs (corresponding to the issue number of the required IC tag 4) contained in the response message. In the case where the IDs corresponding to the issue number of the IC tag 4 required by the return message cannot be obtained, the user is notified of unavailability of the ID via the input/output unit 22.

The tag issue terminal 2 executes the aforementioned tag issue process for writing the ID 261 stored in the ID status file 26 into the IC tag 4. The written ID status is stored as the status 262 of the ID status file 26 as the execution result of the tag issue process (S008).

The tag issue terminal 2 transmits the ID status file 26 to the ID management server 1 together with the terminal number of the tag issue terminal 2 immediately after or after an elapse of predetermined time of execution of the process in step S008 (S009).

The ID management server 1 receives the ID status file 26 transmitted from the tag issue terminal 2, and reflects the status 262 of the ID 261 stored in the ID status file 26 on the status 132 of the corresponding ID 131 in the ID numbering DB 13. In the embodiment, if the ID in the status 262 of the ID status file 26 is in the "issued", the status 132 of the ID numbering DB 13 is kept "used". If the ID in the status 262 of the ID status file 26 is in the "unissued", "cancelled" or "issue failure", the status 132 of the ID numbering DB 13 is changed to the "unused" (S010).

The information relevant to the ID priority issue (priority order) is registered in the ID numbering DB 13 based on the ID priority issue policy set information. In the embodiment, the terminal number of the tag issue terminal 2 is registered as the terminal number 133 based on the set information that the ID in the "issue failure" status is numbered with priority when the tag issue terminal 2 which has failed to write owing to malfunction of hardware such as the tag printer 3 and the IC tag 4 newly issues the IC tag 4. Based on the set information, the ID in the "cancelled" status has the priority 134 registered "high" for allowing the other tag issue terminal 2 to be used with priority because the process for issuing the IC tag 4 is not executed due to the cause other than the hardware malfunction. The aforementioned set information is set based on the ID priority issue policy, and accordingly, the priority order may be changed accompanied with the change of the policy. The ID management server 1 transmits the message notifying that updating of the status 132 of the ID numbering DB 13 has been completed to the tag issue terminal 2 as the transmission source of the ID status file 26 (identified based on the terminal number) (S011).

The tag issue terminal 2 receives the notifying message from the ID management server 1 to confirm with respect to updating of the status 132 of the ID numbering DB 13, and deletes the ID status file 26 (S012).

The process for newly numbering the ID in step S002 is separately executed from the process for obtaining the reusable ID in step S004 so as to simplify the explanation. It is possible to store all the IDs that can be numbered as the ID 131 of the ID numbering DB 13 as the initial state when starting the operation of the IC tag issue management system so as to keep the status 132 "unused". This makes it possible to execute the ID management server 1 by omitting process steps S002 and S003.

The process for obtaining the reusable ID will be described in detail. The process for obtaining the reusable ID may be realized by selectively executing the process for terminal number priority selection, priority selection, and reusable ID collection. In the embodiment, selective process execution is made by selecting the ID through the terminal number priority selection process.

If the IDs do not meet the required number, the ID is further selected through the priority selection. If the IDs still do not meet the required number, the reusable ID is selected through the reusable ID collection. The order for selecting the aforementioned processes is preliminarily set as the ID priority selection policy.

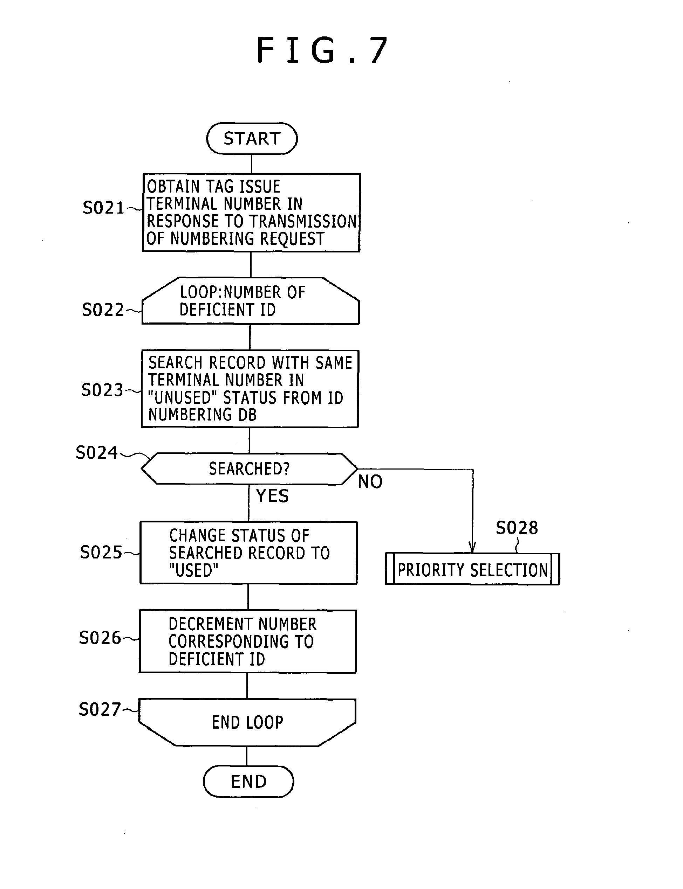

Fig. 7 is a flowchart of the terminal number priority selection process. The terminal number of the tag issue terminal 2 contained in the ID numbering request is obtained (5021). The process up to step S027 is repeatedly executed as many times as the number of deficient IDs (S022).

The record with the obtained terminal number 133 of the tag issue terminal 2 in the "unused" status 132 is searched from the ID numbering DB 13 (S023). If the subject record is not searched, the repetitive process steps from S022 to S027 are skipped, and the process proceeds to step S028 where the priority selection process is executed (S024).

If the record is searched, the ID 131 of the record is stored in the table of the work area (memory region) together with the information indicating the reusable ID (for example, "1"), and the status 132 of the record is changed to the "used" (S025). The number corresponding to the deficient IDs is decremented (S026). The aforementioned process is repeatedly executed until the number of deficient IDs becomes zero (S027). When the number of deficient IDs becomes zero, the process proceeds to step S005 as shown in Fig. 6.

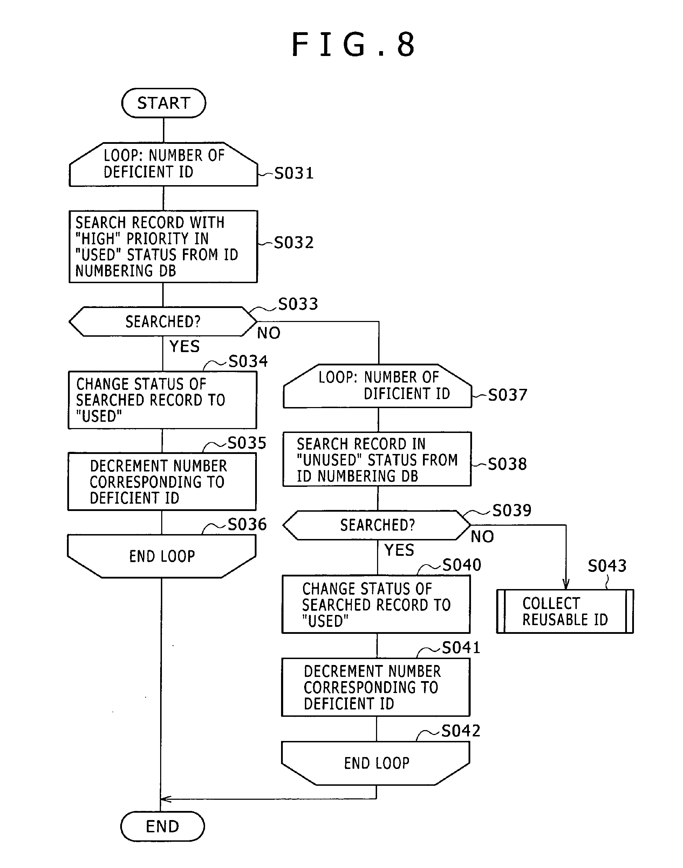

Fig. 8 is a flowchart of the priority selection process. The process up to step S036 is repeatedly executed as many times as the number of the deficient IDs (S031). The record with the priority 134 set to "high" in the "unused" status 132 is searched from the ID numbering DB 13 (S032). If the subject record is not searched, the repetitive process steps from S031 to S036 are skipped, and the process proceeds to step S037 (S033).

If the record is searched, the ID 131 of the record is stored in the work area table together with the information indicating the reusable ID (for example, "1"), and the status 132 of the record is changed to the "used". The priority 134 of the record set to "high" is deleted (S034). The number corresponding to the deficient IDs is decremented (S035). The aforementioned process is executed until the number of the deficient IDs becomes zero (S036). If the number of the deficient IDs becomes zero, the process proceeds to step S005 as shown in Fig. 6.

If it is determined that the subject record is not searched in step S033, that is, the IDs are deficient, the record in the "unused" status 132 is obtained from the ID numbering DB 13 by the number corresponding to the deficient ID irrespective of the terminal number 133 and the priority 134 as described below.

The process up to step S042 is repeatedly executed as many times as the number of the deficient ID (S037). The record in the "unused" status 132 is searched from the ID numbering DB 13 (S038). If the corresponding record is not searched, steps from S037 to S042 are skipped, and the process proceeds to the reusable ID collection process in step S043 (S039) .

If the corresponding record is searched, the ID 131 of the record is stored in the work area table together with the information indicating the reusable ID (for example, "1"), and the status 132 of the record is changed to the "used" (S040). The number corresponding to the deficient IDs is decremented (S041). The aforementioned process is repeatedly executed until the number of the deficient IDs becomes zero (5042). When the number of the deficient IDs becomes zero, the process proceeds to step S005 shown in Fig. 6.

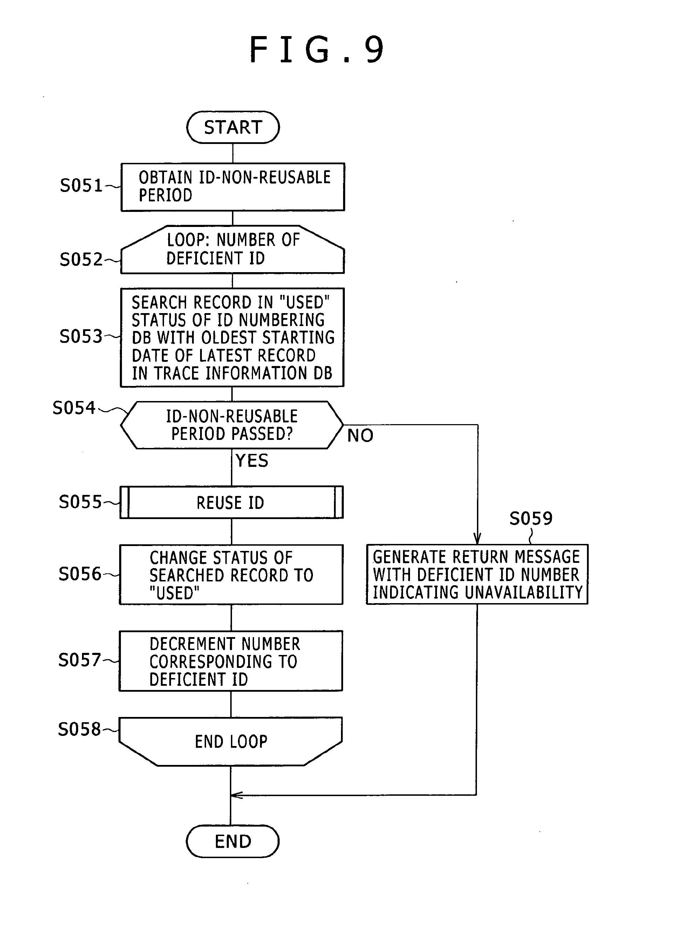

Fig. 9 is a flowchart of the reusable ID collection process.

A preliminarily set "ID-non-reusable period" is obtained. The ID which is kept in use for the period elapsing from the latest date for starting the usage of the ID to pass over the ID-non-reusable period is forcedly made to be reusable (S051). In response to the end of the usage of the ID, the user commands to bring the ID into the reusable state as described later. In the case where the user's command cannot be input in spite of the end of the usage of the ID, the "ID-non-reusable period" is set to allow the ID having its usage completed to be reusable. The "ID-non-reusable period" may be set to four days with a margin in the case where maximum of three days are taken from reception to completion of shipment of the cargo in the process of the logistical cargo management.

The process up to step S058 is repeatedly executed the number of times corresponding to deficient ID in the required number of IDs (5052). The record in the "used" status 132 in the table of the ID numbering DB 13 having the oldest date 154 last registered in the trace information DB 15 (the latest record among those with the same ID) is searched (5053). The time interval between the date 154 of the obtained record and the current date is compared with the "ID-non-reusable period". If the time interval is equal to or shorter than the ID-non-reusable period, there is no reusable ID. Accordingly, the repetitive steps are skipped, and the process proceeds to step S0059 (S054).

If the time interval exceeds the "ID-non-reusable period", the corresponding ID 151 is determined as being reusable ID, and the ID reuse process is executed in step S055 (S055). The ID reuse process will be described later.

After execution of the ID reuse process, the corresponding ID 131 of the ID numbering DB 13 is stored in the work area table together with the information indicating the reusable ID (for example, "1"). The status 132 of the record is changed to the "used" (S056), and the number corresponding to the deficient IDs is decremented (S057). The aforementioned process is executed until the number of deficient IDs becomes zero (S058). When the number of deficient IDs becomes zero, the process proceeds to step S005 shown in Fig. 6.

If the number of deficient IDs does not become zero (IDs corresponding to the issue number of the IC tag 4 contained in the request message (ID numbering request) cannot be obtained), the return message indicating unavailability which contains the number of deficient IDs in the required number is generated (S059). The process then proceeds to step S005 shown in Fig. 6. The return message is contained in the response message to be transmitted to the tag issue terminal 2 in step S006 shown in Fig. 6 together with the obtained ID in the list stored in the work area.

In the embodiment, within the ID-non-reusable period, the IDs cannot be reused, and the IDs for filling the deficiency cannot be obtained. The ID-non-reusable period does not have to be set. In this case, the IDs for filling the deficiency with the latest event information stored in the trace information DB 15 are selected from the oldest one, and the user is asked with respect to reusability prior to the reuse of the selected ID.

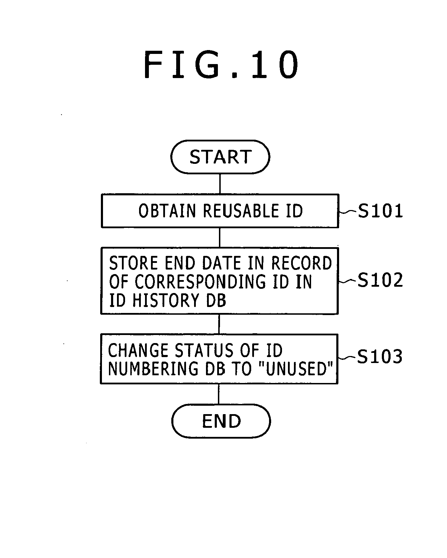

Fig. 10 is a flowchart of the ID reuse process. The ID reuse process is executed to release the ID to be reusable (unused status). The process is executed not only for the reusable ID collection process but also in the case commanded by the user to bring the ID having its usage completed into the reusable status again. For example, the ID reuse process may be executed in the case where the shipment of the cargo to the destination has been finished, and the IC tag 4 is removed from the shipped cargo so as to allow the ID written into the tag to be usable for the other tag.

The ID subjected to the ID reuse process is obtained. If the ID reuse process is executed during the reusable ID collection process, the subject ID is obtained in step S053. If the ID reuse process is executed in response to the command from the user, the ID is transmitted from the tag issue terminal 2 (S101).

The current date (date read from the unshown timer of the ID management server 1) is stored as the end date 144 of the record with the ID 141 corresponding to the obtained ID in the ID history DB 14. Among plural records with the ID 141, the one with the largest history number 142 having no end date 144 stored is subjected to the process for storing the current date (S102).

The status 132 of the record corresponding to the obtained ID in the ID numbering DB 13 is changed from the "used" to the "unused" status (S103). The aforementioned ID reuse process allows the ID which has been used to be reusable.

Through the terminal number priority selection process, the priority selection process, and the reusable ID collection process as the process for obtaining the reusable ID, the reusable ID is obtained to fill the deficiency of the ID caused by numbering of the new ID. The order of executing the aforementioned process may be changed. The reusable ID may be selected in accordance with other criteria rather than the terminal number and priority.

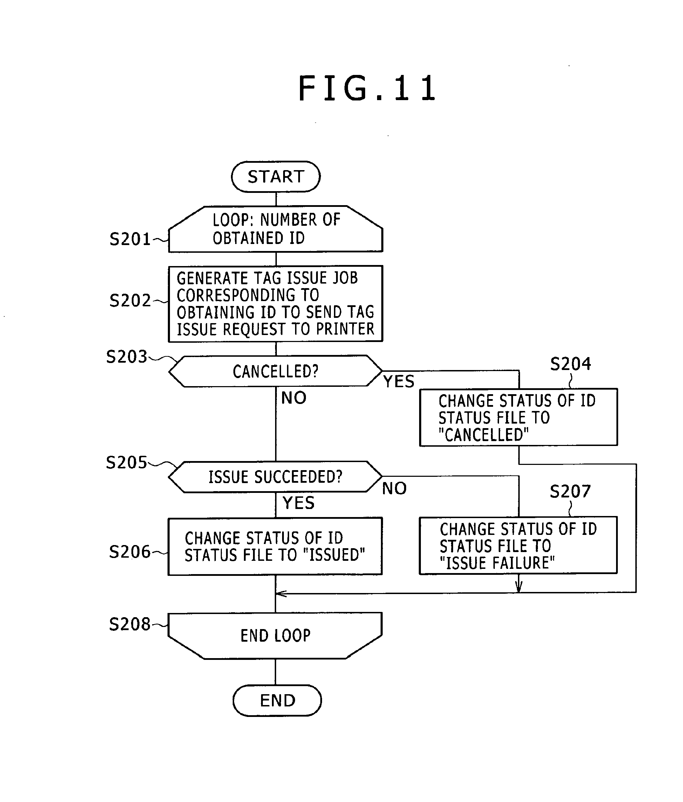

Fig. 11 is a flowchart of the tag issue process in the tag issue terminal 2. The tag issue process is executed in step S008 of the flowchart shown in Fig. 6.

The process up to step S208 will be repeatedly executed for each of the obtained IDs (S201). The tag issue job is generated based on the obtained ID, and the job is executed by the printer control unit 23 (S202).

The printer control unit 23 enqueues the tag issue job to the queue such that the tag printer 3 executes the tag issue sequentially.

If cancellation of the tag issue job is commanded by the user via the input/output unit 22 during execution of the tag issue job or queuing (S203), execution of the running tag issue job is cancelled. The tag issue job subjected to queuing is dequeued to change the status 262 of the ID 261 in the ID status file 26 corresponding to the cancelled or dequeued tag issue job to the "cancelled". The process then proceeds to step S208 (S204).

Upon execution of the tag issue job by the printer control unit 23, the tag printer 3 executes the tag issue (writing the corresponding ID into the IC tag 4) unless the cancelling command is not input. When the operation for writing the ID into the IC tag 4 is normally completed by the tag printer 3 (S205), the status 262 of the corresponding ID 261 in the ID status file 26 is changed to the "issued". Then the process proceeds to step S208 (S206). If the writing is abnormally completed, the status 262 of the corresponding ID 261 in the ID status file 26 is changed to the "issue failure". The process then proceeds to step S208 (S207).

The aforementioned process is executed number of times corresponding to the obtained IDs (S208).

The retry process executed in the case of the issue failure is not described. If the tag issue is normally completed by executing the retry process, the status 262 is set to the "issued".

In the aforementioned reusable ID obtaining process, the ID reuse process and the tag issue process, the ID having its usage completed may be reused to efficiently use the limited number of IDs, thus preventing depletion of the IDs. The information indicating whether or not the tag has been issued is collected and held to make it possible to reuse the ID of the IC tag which has not been issued owing to the user's cancellation and printer failure although the ID has been numbered. When reusing the ID, the priority order is set in accordance with the condition where the ID becomes reusable such that the reusable ID is selected with priority. If no reusable ID exists, the ID which has not been read or registered with respect to its usage for a long time is regarded as the one which has not been actually used. Such ID may be made reusable to be available for filling deficiency of the reusable ID.

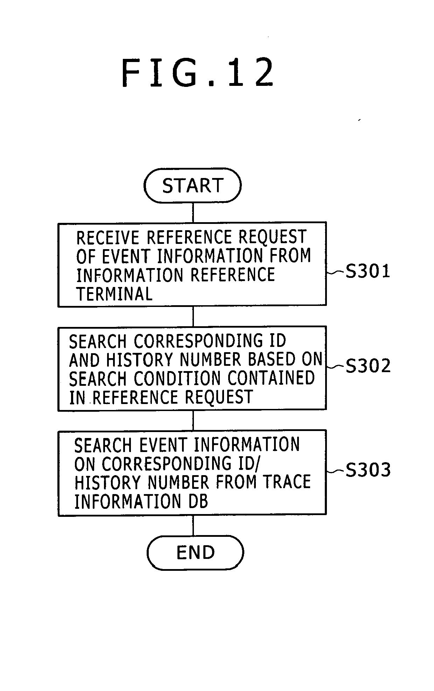

The process for referring event information stored in the trace information DB 15 of the ID management server 1 using the unshown information reference terminal performed by the IC tag issue management system will be described hereinafter. The process is executed upon confirmation as to which process the cargo designated by the owner for the shipment is subjected to, or whether such cargo has been correctly shipped. Fig. 12 is a flowchart of the event information reference process in the IC tag issue management system.

The ID management server 1 receives a reference request message with respect to the event information from the browser of the information reference terminal and the like (S301). The reference request message contains the ID stored in the IC tag 4, and attribute information (such cargo information as owner, item, accepted date, and expected shipment date) held in the ID attribute DB 16.

The ID contained in the reference request message is obtained. If the ID is not contained in the reference request message, the ID attribute DB 16 is searched based on the attribute information contained in the reference request message so as to obtain the corresponding ID and the history number 142 indicating history of the use. The ID history DB 14 is searched based on the obtained ID and the history number 142 to obtain the starting date 143 corresponding to the history number 142 indicating the history of usage of the obtained ID (S302). The history number 142 is specified as the one indicating the latest usage history. Depending on the attribute information contained in the reference request message, the history number may be specified as the one for indicating the usage history of the past ID having its use already completed.

The trace information DB 15 is searched based on the obtained ID and the starting date 143 to obtain the event information which relates to the obtained ID after the starting date 143. The obtained event information is sorted based on the date when the event occurs so as to be transmitted to the information reference terminal which has transmitted the reference request message (S303).

Under the condition of the item in the ID attribute DB 16, the corresponding ID and the history number are obtained. However, the user information which allows reference with respect to the cargo owner may be held in the ID attribute DB 16 so as to specify the ID and the history number by authenticating the user upon the reference request.

In the embodiment, the ID having its usage for the IC tag completed, or the ID which has not been actually issued for the IC tag may be reused to prevent depletion of the ID by efficiently using the limited number of IDs. Especially, the ID which cannot be collected although its usage has been completed as the ID for the IC tag may be reused.

In the embodiment, in the case where the ID is reused for referring to the event information, the event information which occurs in the ID-usable period may be distinguished from the event information which occurs before/after such period based on the history number. This makes it possible to refer to the event information desired by the user for the reference or the referable event information.

The embodiment of the present invention has been described. It is to be understood that the present invention is not limited to the embodiment but may be changed into various forms. The cargo management operation has been described as the embodiment. However, the present invention is applicable to the arbitrary operation so long as the usage state of the IC tag is identified. For example, the present invention is applicable to the operation for managing the returnable logistical container such as palette.

Uniform management of the trace information by the ID management server has been described in the embodiment. The information may be distributed to be stored, or the process to be executed by the server may be distributed, for example, another server is allowed to execute the trace information DB and the trace information management process.

## Claims

1. An IC tag issue management system comprising:
an ID numbering DB which stores an ID and a status indicating one of a "used" status and an "unused" status of the ID in correlation with each other;
an ID history DB which stores the ID, a history number indicating a reuse history of the ID, and a usage history having a starting date and an end date of usage of the ID indicated by the history number correlated with each other;
a processing unit which numbers the ID with the usage history having a time elapsing from the starting date of the usage history in which the end date is not stored in the ID history DB passing over a predetermined ID-non-reusable period as the ID to be written into the IC tag in response to a request for numbering the ID to be written into the IC tag when the unnumbered ID which has not been allocated to the IC tag, and the ID having the status of the ID numbering DB set in the "unused" status do not exist; and
a tag printer which writes the numbered ID into the IC tag.

2. The IC tag issue management system according to
claim 1, wherein when the unnumbered ID exists, the processing unit numbers the unnumbered ID as the ID to be written into the IC tag.

3. The IC tag issue management system according to claim 1, further comprising:
an ID management server provided with the ID numbering DB, the ID history DB, and the processing unit; and
a tag issue terminal which issues the numbering request of the ID to be written into the IC tag, and is connected to the tag printer.

4. The IC tag issue management system according to claim 3,
wherein the ID numbering DB stores a terminal number indicating the tag issue terminal which has notified with respect to completion of use of the ID in correlation with the ID; and
in the case where the unnumbered ID does not exist, the ID having the status of the ID numbering DB set to the "unused" exists, and the terminal number stored corresponding to the ID in the "unused" status indicates the tag issue terminal which has issued the numbering request, the processing unit numbers the ID corresponding to the terminal number stored in the ID numbering DB as the ID to be written into the IC tag.

5. The IC tag issue management system according to claim 3,
wherein the ID numbering DB stores a "high" priority level indicating that writing of the numbered ID into the IC tag performed by the tag issue terminal is cancelled, in correlation with the ID; and
when the unnumbered ID does not exist, and the ID having the status of the ID numbering DB set to the "unused" exists, the processing unit numbers the ID corresponding to the "high" priority level stored in correlation with the ID in the "unused" status as the ID to be written into the IC tag.

6. The IC tag issue management system according to claim 3,
wherein the ID management server is connected to an information reference terminal for issuing a reference request message to the ID management server;
a trace information DB is provided for storing event information indicating a subject event accompanied with the use of the IC tag into which the ID is written, and a date when the event occurs, in correlation with the ID; and
the processing unit of the ID management server specifies an ID and a history number based on the subject attribute information using the IC tag contained in the reference request message, obtains the specified ID and the starting date with the usage history of the history number from the ID history DB, searches the event information indicating that the date when the event occurs is after the obtained starting date from the trace information DB, sorts the searched event information based on the date when the event occurs, and transmits the event information to the information reference terminal which has sent the reference request message.

7. An IC tag issue management method for an IC tag issue management system which includes an ID numbering DB which stores an ID and a status indicating one of a "used" status and an "unused" status if the ID in correlation with each other, and an ID history DB which stores the ID, a history number indicating a reuse history of the ID, and a usage history having a starting date and an end date of usage of the ID indicated by the history number correlated with each other,
numbering the ID with the usage history having a time elapsing from the starting date of the usage history in which the end date is not stored in the ID history DB passing over a predetermined ID-non-reusable period as the ID to be written into the IC tag in response to a request for numbering the ID to be written into the IC tag when the unnumbered ID which has not been allocated to the IC tag, and the ID having the status of the ID numbering DB set in the "unused" status do not exist, and
writing the numbered ID into the IC tag using a tag printer.

8. The IC tag issue management method according to claim 7, wherein when the unnumbered ID exists, numbering the unnumbered ID as the ID to be written into the IC tag.

9. The IC tag issue management method according to claim 7, wherein the IC tag issue management system includes an ID management server provided with the ID numbering DB and the ID history DB, and a tag issue terminal which issues the numbering request of the ID to be written into the IC tag, and is connected to the tag printer.

10. The IC tag issue management method according to claim 9,
wherein the ID numbering DB stores a terminal number indicating the tag issue terminal which has notified with respect to completion of use of the ID in correlation with the ID; and
in the case where the unnumbered ID does not exist, the ID having the status of the ID numbering DB set to the "unused" exists, and the terminal number stored corresponding to the ID in the "unused" status indicates the tag issue terminal which has issued the numbering request, the ID management server numbers the ID corresponding to the terminal number stored in the ID numbering DB as the ID to be written into the IC tag.

11. The IC tag issue management method according to claim 9,
wherein the ID numbering DB stores a "high" priority level indicating that writing of the numbered ID into the IC tag performed by the tag issue terminal is cancelled, in correlation with the ID; and
when the unnumbered ID does not exist, and the ID having the status of the ID numbering DB set to the "unused" exists, the ID management server numbers the ID corresponding to the "high" priority level stored in correlation with the ID in the "unused" status as the ID to be written into the IC tag.

12. The IC tag issue management method according to claim 9,
wherein the ID management server is connected to an information reference terminal for issuing a reference request message to the ID management server;
the ID management server includes a trace information DB for storing event information indicating a subject event accompanied with the use of the IC tag into which the ID is written, and a date when the event occurs, in correlation with the ID; and
the ID management server specifies an ID and a history number based on the subject attribute information using the IC tag contained in the reference request message, obtains the specified ID and the starting date with the usage history of the history number from the ID history DB, searches the event information indicating that the date when the event occurs is after the obtained starting date from the trace information DB, sorts the searched event information based on the date when the event occurs, and transmits the event information to the information reference terminal which has sent the reference request message.
